# EUROPEAN PATENT SPECIFICATION

(11) **EP 2 592 321 B1**
(45) Date of publication and mention of the grant of the patent: **14.09.2016**
(21) Application number: 13154458.7
(22) Date of filing: 17.02.2006
(51) Int. Cl.: F16L 19/14, F16L 19/10, F16L 37/138, F16L 13/14

(54) **A pipe coupling**
Rohrverbindung
Couplage de tuyau

(30) Priority: 25.02.2005 GB 0503954; 22.07.2005 GB 0515165
(43) Date of publication of application: 15.05.2013
(62) Divisional of application: 06709798.0
(73) Proprietor: Parker Hannifin Manufacturing Limited, Hemel Hempstead, Hertfordshire HP2 4SJ (GB)
(72) Inventor: Nicholson, Spencer, Barnstaple, Devon EX31 1NP (GB)
(74) Representative: Jones, David Alan

(56) References cited:
- EP-A- 0 309 179
- DE-A1- 1 600 466
- US-A- 1 969 142
- US-A- 3 707 302
- US-A- 5 181 752

## Description

The present invention relates to a coupling for attaching tubes, pipes, conduits and other round sections to other such items and/or other systems.

Initially this invention has been developed within the instrumentation tube fittings industry. However, the invention is capable of being utilised within many other applications outside of this environment. Other applications may include shipbuilding, aerospace, automotive, pipe connections, and construction using wire e.g. suspension bridges.

At present a commonly used connector is a ferrule compression fitting comprising one or more ferrules to be threaded over a tube or the like and a tightening device to cause the one or more ferrules to grip the outside of the tube or the like to provide a seal against leakage. GB 928,715 and US 6,131,963 show examples of twin ferrule connectors. WO 2005/019716 discloses a tube fitting for a tube end, the tube fitting comprising a body with an interior bore to receive a tube end and a collar to be threadably coupled onto the body. The collar includes an integral tube gripping ring that co-operates with a camming surface on the body when the collar is threaded onto the body to force the ring to plastically deform into the tube end. WO 2005/019717 discloses a tube fitting for a tube end, the tube fitting comprising a female threaded coupling member and a male threaded coupling member that are threaded together to assemble the fitting onto a tube end. Whilst being threaded together, a ferrule is detached from the female threaded coupling to form a separate ferrule fitting which is plastically deformed against the outer wall of the tube end and forms seals with the male coupling member and the tube end. US 1,969,142 describes a two-part tube connector in which an inner thread is used to axially force the tube against a sealing surface located within the connector.

The following problems are associated with these designs and a variety of methods have been used in the past to overcome these issues.
- The design relies on the use of controlled material specifications to ensure that the ferrules have enhanced mechanical properties over that of the tube.
- The rear ferrule is treated by one of many processes to enhance the surface hardness. This in itself can cause issues as traditional hardening methods such as nitriding induces carbon into the material, which reduces the surfaces corrosion resistance.
- Tube selection is critical within the design. The tubing used with these fittings often has to be purchased with special restrictions of some properties such as skin hardness.
- Incorrect tube preparation can cause major problems within the assembly of the fitting and this is one aspect that the manufacturer has no control over.
- Longitudinal scratches on the tube can cause leak paths with these fittings. Basic tube handling commonly causes these scratches. These minor surface defects are often manually removed prior to assembly, which adds to the assembly time.
- Due to the requirement of enhanced materials it is accepted that compression fittings manufactured from austenitic stainless steel are not suitable for use within certain environments and do not comply with the NACE standards.
- The method used to assemble a tube into a compression fitting relies on the end user adjusting the fitting until tube grip is achieved such as by using a threaded connection. This is detected by feel and thus every user will have their own opinion of when this is met. Once this point has been achieved the nut of the fitting is tightened by 1 ¼ turns and not to a specified torque or a dead stop. This is seen by a limitation within certain fields such as the automotive industry.

Embodiments of the invention disclosed herein provide a new type of coupling which eliminate or alleviate at least some of the above problems.

According to a first aspect of the present invention there is provided a coupling according to claim 1 for attaching to an end of a pipe, tube, conduit or other round, solid or hollow section. The coupling comprises an inner body with an interior bore passing through at least a portion thereof to receive a tube or the like. The bore has one or more interior annular protuberances extending into the bore. The coupling further includes a collar to be provided around the inner body to apply a circumferential compressive force to deform the inner body, and configured to engage with and be held by the inner body. The inner body and the collar each have co-acting inclined surfaces inclined to their axes such that, in use, when a tube or the like is received in the bore of the inner body and the collar applies a circumferential compressive force thereto, the body is deformed such that the one or more annular protuberances engage the tube (18) or the like to seal with it. Furthermore, the inner body and collar are provided with holding means to retain the collar in engagement around the inner body to prevent separation.

The coupling requires only two parts reducing manufacturing costs and making assembly straightforward. Furthermore as the body, which has one or more interior annular protuberances which extend into the bore prior to use, is deformed such that the one or more annular protuberances provided thereon are forced into engagement with the tube or like, it has been found that a particularly robust seal is provided. The tube or the like is retained in the inner body providing considerable resistance to being axially withdrawn.

The body has a frusto-conical or cylindrical portion with the bore and one or more interior annular protuberances therein, and is preferably arranged such that the collar may be provided around the frusto-conical or cylindrical portion so that, in use, the frusto-conical or cylindrical portion is deformed by the collar.
As the inner body upon which the annular protuberances are provided is deformed, the annular protuberances can undergo a larger radial displacement than conventional ferrules. This larger radial displacement enables higher compressive loads to be placed on the tube or the like providing better seals and grip and the coupling can be used with tubes or the like with larger dimensional tolerances than conventional ferrule couplings. Furthermore, the large radial displacement of the annular protuberances compresses the cross-section of the tube or the like where they engage which splays the tube or the like on either side. The splaying of the tube or the like on either side enhances the resistance to withdrawal of the tube or the like from the coupling. The larger radial displacement of the annular protuberances enables the coupling to be used with tube or the like which has not been specially prepared and which may have scratches reducing preparation time for the tube and thus costs. Furthermore, unlike conventional ferrule fittings, the tube or the like does not need to abut against a stop within the coupling as the protuberances provide such a good seal. This overcomes the need for the end of the tube or the like to be cut precisely square, further reducing preparation time and costs. The larger radial displacement of this coupling compared to conventional ferrule fittings provides larger forces such that the material of the engaging protuberances does not need to be specially hardened unlike conventional ferrule fittings. However, the protuberances could, if desired, be hardened for advanced performance. The larger radial displacement of this coupling also ensures that the protuberances engage all points around the circumference of a tube or the like, even when its cross-section is not precisely round. For example a tube or the like with a slightly oval cross-section will be pushed back into shape and a better connection will be made compared to conventional fittings.
The interior annular protuberances on the inner body may compress the outside of the tube or like to which it is fitted. However, the interior annular protuberances preferably have a cutting surface to breach the skin of a tube or the like to which it is fitted. The skin of a tube or the like has a higher level of hardness than its core material resulting from its
manufacture. By the cutting surface being able to breach the skin of a tube or the like to reach the softer core material, a superior seal and resistance to axial removal of the tube or like is obtained.
Any number or size of interior annular protuberances may be provided depending upon requirements. If more interior annular protuberances are provided, a more robust seal is achieved.

A female screw thread may be provided in the interior of the bore. The screw thread may replace one or more of the interior annular protuberances. A screw thread is generally easier to manufacture than an interior annular protuberance. For example, one, two or three of the interior annular protuberances nearest to the open end of the claw end may be replaced by a screw thread. However, when a screw thread is provided, there is preferably still at least one interior annular protuberance still provided in the interior of the bore to engage a tube/pipe or the like to be inserted into the bore. In use the screw thread will deform in a similar manner to the annular protuberances which will in turn cause the tube/pipe or the like to deform and thus cause a "bite" effect.

The collar may be arranged to apply a circumferential compressive force to deform the body in any suitable way, for example a so-called shaft clamp, hub clamp or hose type "jubilee" clamp may be used. However, the inner body and the collar preferably each have complimentary camming surfaces inclined to their axes which co-act to apply the circumferential compressive force to deform the body. The collar and the inner body are preferably arranged to be moved relatively towards each other so that the camming surfaces co-act. The collar and the inner body may be moved towards each other by any suitable means, such as by using an appropriate tool or by using corresponding threads on the inner body and collar such that the collar is rotated relative to the inner body to pull it over the inner body. The complimentary camming surfaces may be inclined at any desirable corresponding angles to provide a longer or shorter distance over which the inner body and collar may be moved towards each other. The complimentary camming surfaces may be provided by an external frusto-cone on the inner body and a corresponding frusto-conical inner surface within the collar. One or both of the camming surfaces could be provided with a friction reducing coating or plating to reduce the forces required during use.

Once the collar and inner body are moved towards each other sufficiently, a holding means keeps them in the desired relative positions. The holding means may be an interference fit.

According to a second aspect of the present invention there is provided a method of attaching a coupling to an end of a tube, pipe, conduit or other round solid or hollow section, the method comprising
providing a tube or the like into a bore passing through at least a portion of an inner body, the bore having one or more interior annular protuberances extending into the bore; and
providing a collar around the inner body and using the collar to apply a circumferential compressive force thereto so that the body is deformed bringing the one or more annular protuberances into engagement with the tube or the like.

Embodiments of the present invention will now be described by way of example only, with reference to the accompanying drawings in which:
Figure 1 shows an inner member partially in cross-section;
Figure 2 shows an enlarged view of a portion of the inner member;
Figure 3 shows a collar partially in cross-section;
Figure 4 shows another collar partially in cross-section;
Figure 5 shows a perspective view of another collar;
Figure 6 shows a cross-section of another collar;
Figure 7 shows a perspective view of a collar and an inner member pre-assembled onto a tube or the like;
Figure 8 shows a cross-sectional view of a collar being moved axially relative to an inner member;
Figure 9 shows a perspective view of a collar on an inner member after activation;
Figures 10 to 12 show the various stages of a collar being moved axially relative to an inner member;
Figure 13 shows an alternative view of a collar fitted over an inner member;
Figure 14 shows cross-sectional view of a further embodiment of a collar and inner member;
Figure 15 shows a perspective view of the embodiment shown in Figure 14 and
Figure 16 shows a further cross-sectional view of a collar and inner member.

The following examples discuss the invention being used in conjunction with traditional tube. However the invention can also be used with pipe, solid rod, wire rod or any other round section.

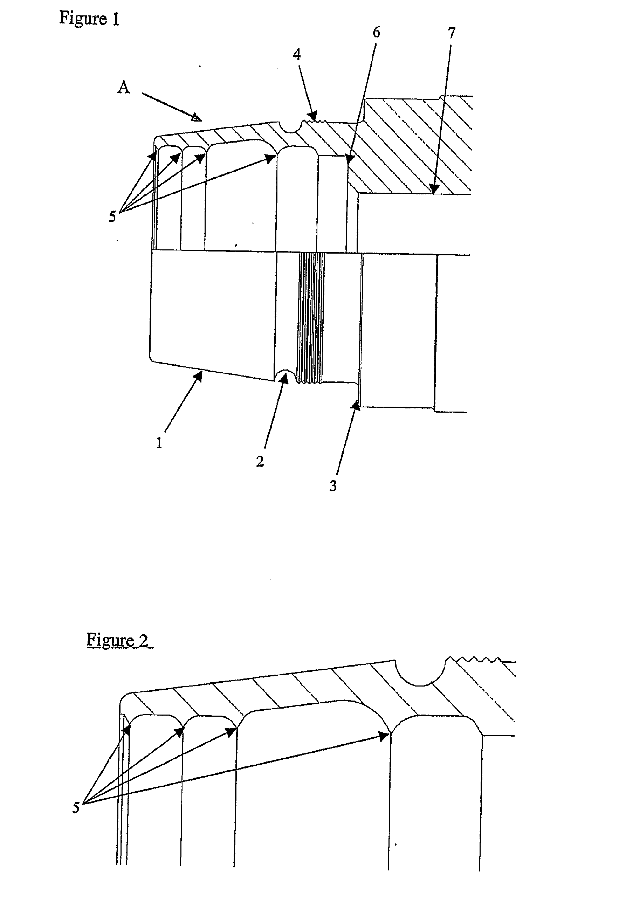

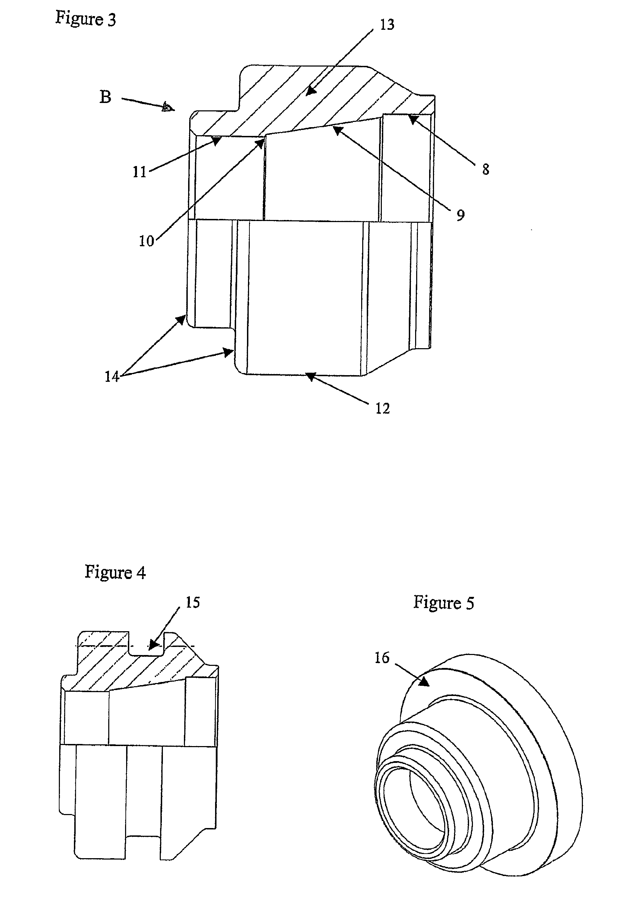

Embodiments of the invention include a method of attaching a coupling and a coupling that can for example, be machined into a traditional coupling, as will be shown in the following example, or machined onto existing equipment such as, but not limited to, valves, manifolds, pumps, hoses etc. The coupling comprises an inner body or a sealing member as shown for example in Figures 1 and 2 and a separate section or collar as shown for example in Figure 3, which is used to modify the form of the sealing member.

The sealing member seals against a tube and also retains the tube in position. This member will be referred to as the claw end in the following description and is shown in Figs 1 and 2.

In this example the claw end A has an outside surface with an external frusto-cone 1 which is inclined to the axis of the claw end, in this example by around 20°, and which has a semi circular groove 2 at the large end of the frusto-cone. Other groove cross-sections have been proven to give the same result such as a square form which may have radii in each corner. A large shoulder 3 is provided, which is used as a positive stop that will be discussed later. There is also a portion between the semi-circular groove 2 and the large shoulder 3 that contains a number of small grooves 4. These grooves 4 are to give an interference fit which will be discussed later. These grooves 4 can also be replaced by other means to provide an interference fit such as a plain portion or a slightly tapered portion. Other combinations of angles, grooves and serrations have also be proven to give adequate functionality.

Internally within the claw end A there are a number of interior annular protuberances or teeth 5 that can be generated with either sharp points, small radii of around 0.2mm or small flat lands of around 0.2mm width. It should be noted that in this example four teeth are shown but any number of teeth can be utilised depending upon performance requirements.

Inwardly from the open end of the claw end, beyond the teeth 5, this example shows a plain cylindrical portion that is concluded by an internal shoulder 6. This shoulder 6 then leads into a smaller internal bore 7. It should be noted that the invention does not require the internal shoulder 6 resulting in the bore 7 being of similar diameter to that of the teeth 5. The internal shoulder 6 is utilised only as a guide for tube / pipe insertion depth and can be achieved by using other methods such as a marking on an inserted tube to indicate minimum / maximum tube insertion.

The second member is the component which provides the profile, which will be compressed onto the first member, the claw end A. This second member will be referred to as the collar B and examples of it are shown in Figs 3, 4, 5 and 6.

In this example the internal profile of the collar includes a plain cylindrical portion 8, which is designed to give an interference fit with the grooved section 4 of the claw end. This plain cylindrical portion 8 could be replaced by a slightly tapered portion or a grooved portion (similar to that of the grooved portion on the claw end 4) that would also generate an interference fit. Other profiles have also been used such as a small lip and / or an additional spring clip. The form then changes to an internal taper 9, in this example of around 20° inclusive. However, any taper could be provided for example between 5° and 80° or between 10° and 30°. This internal frusto-conical profile 9 is then transferred into a small step 10 that contains a large radius at the interchange between the cone 9 and the step 10. There is also a plain cylindrical bore 11 through the remainder of the collar through which a tube / pipe will pass through. Other combinations of angles, grooves and serrations have also be proven to give adequate functionality.

The external profile 12 of the collar, unlike most existing tube fittings can be manufactured from any available material section e.g. round, hexagonal, square cross-section. The only requirement of this external profile is that adequate wall thickness 13 between the internal cone 9 and the external profile 12 is provided, so that swelling of the external profile 12 is restricted. This restriction ensures that the deformation generated by the two engaging frusto-cones 1 & 9 is produced internally onto the tube and not externally onto the collar external profile 12.

The last profile of the external form of the collar B is by means of a number of solid face(s) 14 which are perpendicular to the axis of the internal profile. This profile will be utilised to force the collar B onto the claw end A. It should be noted that although in the example of Figure 3 the profile 14 is provided at the same end of the collar as the plain bore 11, this profile 14 which is utilised to force the collar onto the claw end could be provided by means of an undercut 15 in the external profile 12 of the collar as shown in Figure 4 or an additional shoulder 16 as shown in Figure 5.

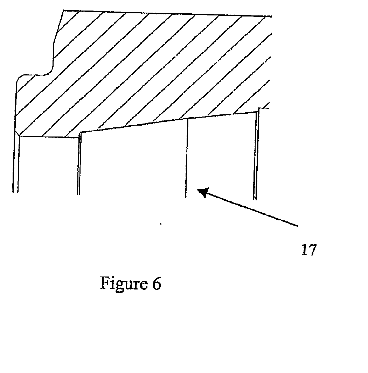

It is important to note that although in Figs 3 and 4 the internal frusto-cone 9 is shown as one continuous angle, it would also be possible to utilize two or more angles 17 as shown in Fig 6 to change the rate of deformation at any given point during compression.

It should also be noted that in both components a frusto-cone inclined to the component axes by around 20° has been described. However, other angles would be acceptable for use. By lessening the angle the amount of compression generated per unit of collar movement would be reduced, as would the force required to generate this movement. A larger angle would have the opposite effect. The inclination can be selected appropriately for envisaged uses of particular connectors.

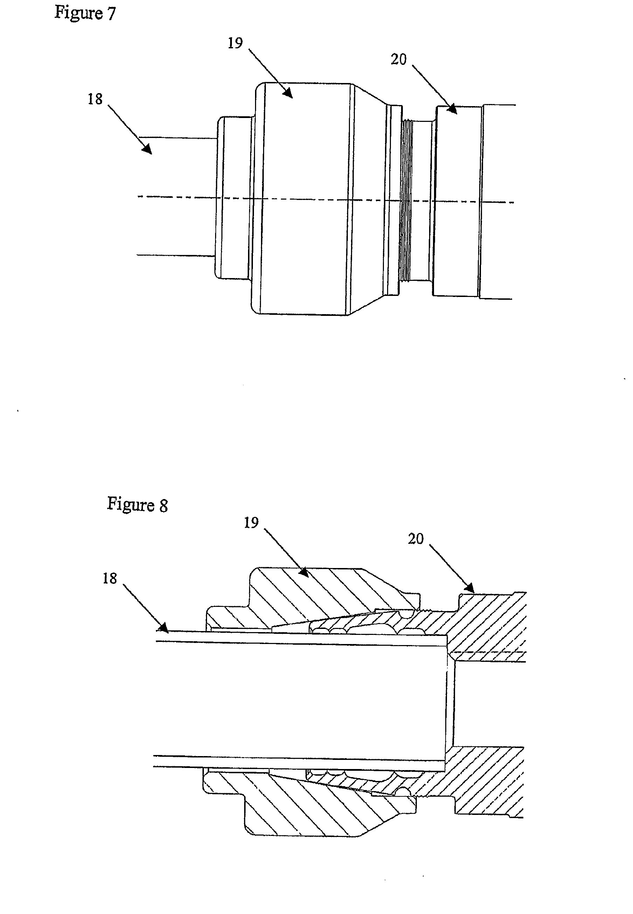

The pre-assembled components are shown in a perspective view in Figure 7 and in cross-section in Figure 8. In use a piece of tube 18 is inserted through the plain bore 11 of the collar 19. The tube is then inserted through the internal profile of the claw end 20 ensuring that the tube travels past the last tooth 5 and into the plain cylindrical portion and abutment face 6. In this example the tube is inserted to a dead stop, however this feature is not a necessity and can be omitted if required, providing an alternative method of ensuring that the tube is inserted to the correct distance is provided.

Once the tube 18 is in place, the collar 19 is forced onto the claw end 20. In this example this force is generated by an external method such as a hydraulic ram, a pneumatic ram or an electrical linear slide, such that the two components are 'simply' pushed together. However, the collar 19 can be forced onto the claw end 20 by any suitable method.

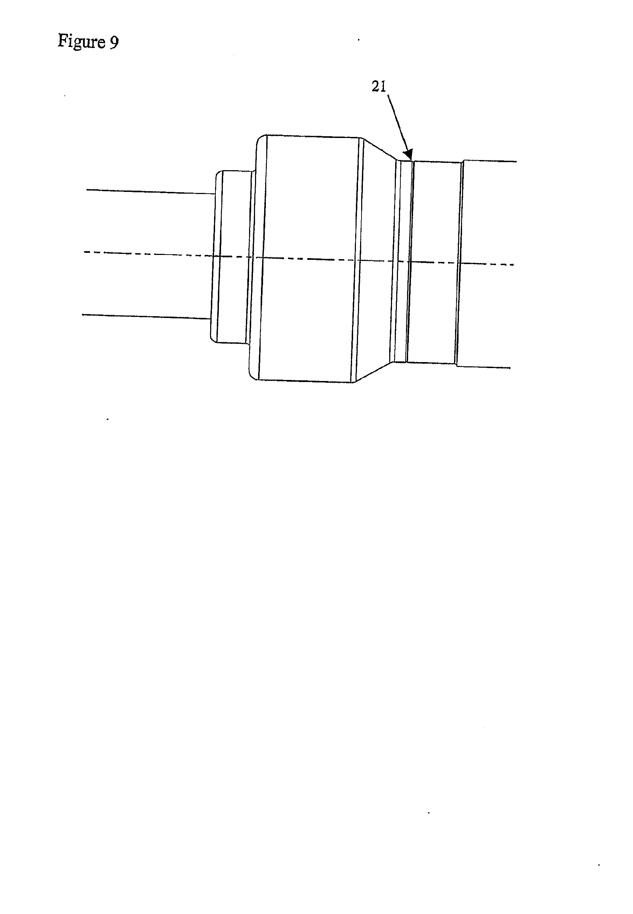

As the collar 19 is forced over the external frusto-cone 1 of the claw end 20, the external frusto-cone 1 engages with the internal frusto-cone 9 or cones 17 of the collar. In this example the solid face 14 would be used to apply the linear force until the opposite end of the collar makes contact 21 with the shoulder 3 of the claw end as shown in Figure 9.

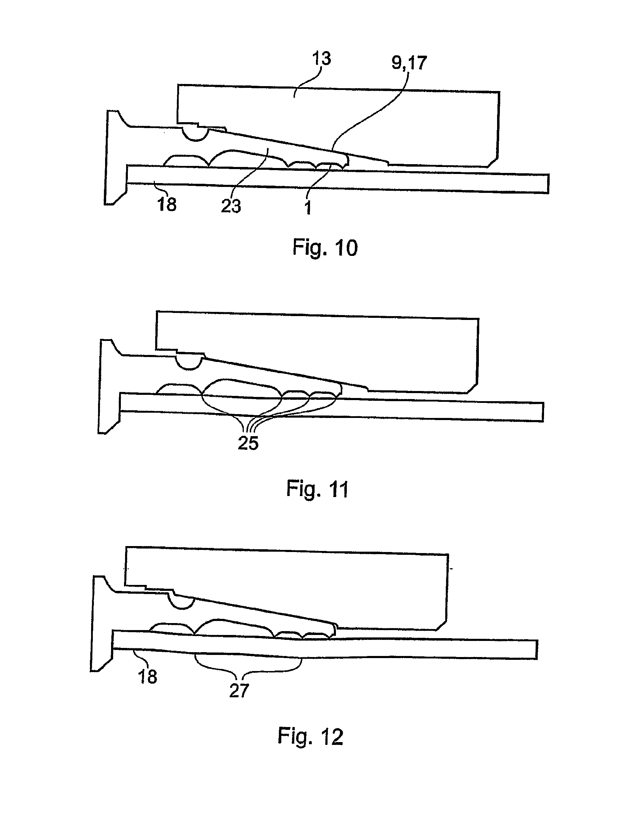

Internally during compression, the form of the end of the claw end alters as shown in Figures 10 to 12. The components are supplied with the collar fitted to the end of the claw end and retained by means of an interference fit to prevent separation. In Figure 10 the tube is shown fully inserted. During compression the internal tapered portion 9 & 17 of the collar engages with the external frusto-cone of the claw end 1. Providing that the thickness of the collar 13 is adequate to resist the hoop strength of the claw ends section 23, the form of the claw end will begin to compress inwards. This compression will pivot about the semi-circular undercut 2. Tube grip occurs at this point when the claw end's teeth 5 make contact 25 with the tube 18 as shown in Figure 11. Ideally all teeth will make contact at the same point during actuation, however this is not essential.

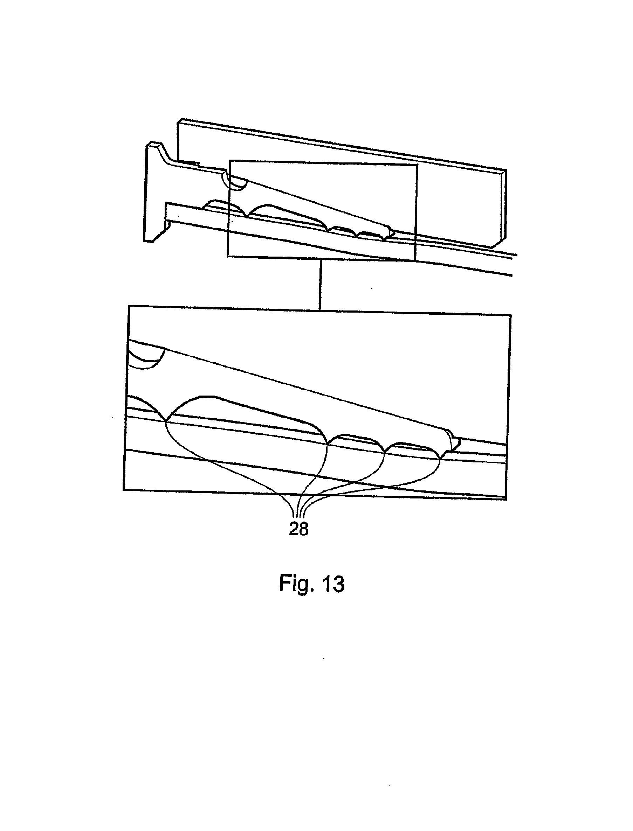

The teeth 5 will primarily cut into the outer skin of the tubing 18 until a point where the forces required to cut into the skin become larger than the forces required to deform the tube. At this point the tube 18 will begin to deform 27. As shown in Figure 12, this will result in the tube swelling in some areas and in some areas contracting. This deformation combined with the initial tube bite produces two outcomes that are particularly advantageous when considering a tube/ pipe fitting. Firstly a high quality seal is achieved between the tube 18 and the internal form / teeth 5 of the claw end. These seal points 28 are shown in Figure 13. Please note the seal points shown in this example are dependent upon the number of teeth and their position and can be varied as required.

When fully compressed as shown in Figure 12, the tube 18 is also deformed 27 resulting in a form that cannot be removed from the claw end. This tube bite / compression is shown in Figure 13. The outer skin of the tubing is broken 28 by each tooth 5. This results in an enhanced seal due to the fact that the skin of tube / pipe has a higher level of hardness than the core material due to cold forming processes used in its manufacture.

Embodiments of this invention address the issues currently encountered with the existing design as follows:
- Embodiments of the invention can be manufactured from standard commercial material and require no enhancements. However, enhancements can be offered to meet the future demands of our ever changing industry needs. As an example, higher pressures / temperatures may require enhanced properties within the material or the material may require additional processing.
- No treatment processes are required within the components of this design which reduces the corrosion resistance of the surfaces. However, enhancements can be offered to meet the future demands of our ever changing industry needs. As an example, higher pressures / temperatures may require enhanced properties within the material or the material may require additional processing.
- Embodiments of the invention are more tolerant to standard tubing and thus no special restrictions of some properties such as skin hardness need to be made.
- Embodiments of the invention are tolerant to poorly prepared tubing.
- Longitudinal scratches on the tube do not pose a problem to embodiments of the invention as the initial bite of the teeth cuts through the skin.
- The coupling can be manufactured in materials which are compatible with various standards such as NACE.
- The methods used to assemble the coupling to the tube can rely on either a thread or a mechanical tool, both of which can assemble to a dead stop or pre-determined torque.

The examples shown above utilise a body, which contains the claw end profile. However it should be noted that embodiments of invention could accommodate the claw end body being made of two individual items including the holding means referred to in claim 1, the first containing the external frusto-cone, the internal bore that contains the teeth and a sealing portion to seal between either sections of the body and the second would contain a sealing portion, to seal between either sections of the body, and a threaded portion that a nut would connect with.

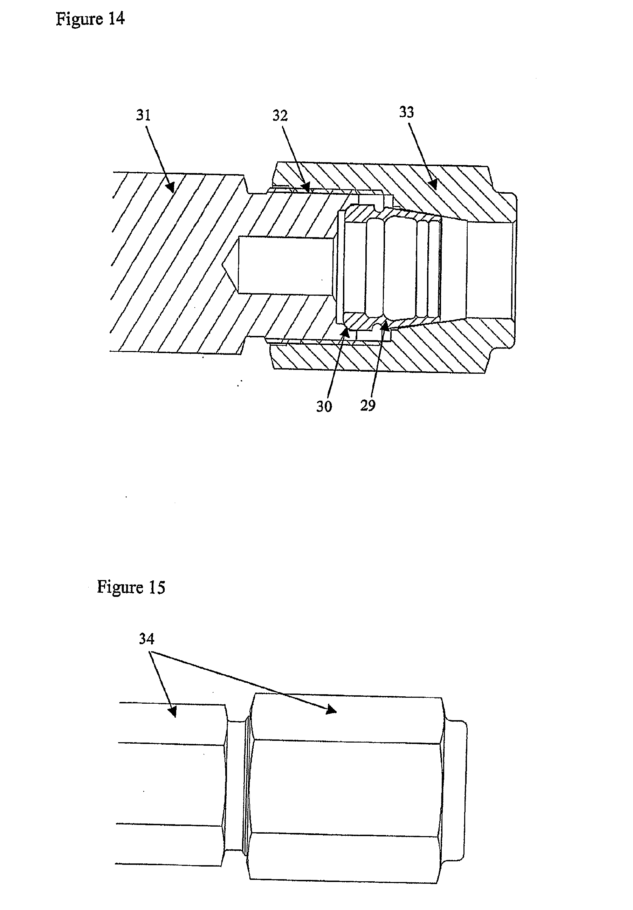

In Figure 14, the device does not include the holding means and is therefore outside the scope of the claims.In this case, the sealing arrangement previously discussed as the claw end is now generated as a ferrule 29. This ferrule contains the same internal and external profile as the claw end including the teeth 5, the external frusto-cone 1 and the semi-circular groove 2. However in addition to these profiles there is also a sealing surface 30 used to generate a seal between the ferrule and the secondary body 31. The secondary body 31 contains a mating sealing surface 30. It also contains a plain bore that serves the same purpose as the plain bore of the claw end 7. Externally the secondary body 31 contains a male thread 32 that is used to screw the collar, in this example in the form of a nut 33, onto the secondary body 31. It is this thread 32, which generates the force required to deform the ferrule 29 in the same way as the claw end was deformed in the previous example.

It should be noted that in this example both the body 31 and the nut 33 contain means by which a rotational force can be transferred to the thread. Figure 15 shows a hexagonal form 34 on both components. However, this is not essential as any form capable of being rotated will be acceptable such as a square form or two or more flats on a diameter.

Additionally the threads on the secondary body and nut could be inverted such that the secondary body contains the female thread and the nut contains the male thread. The ferrule 29 would then sit within a part of the body. This version would be particularly suited for use within existing equipment such as valves and manifolds. Both of the ferrule designs mentioned above could be used as termination style product, i.e. they would be utilised at points within a tubing / piping system where the connection needs to be disconnected.

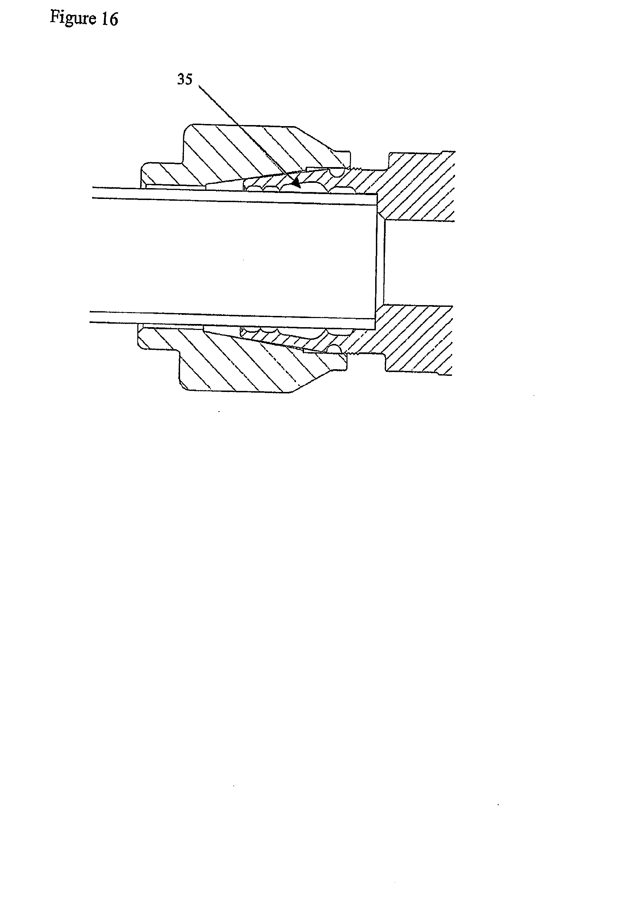

Many variations may be made to the examples of the invention discussed above without departing from the scope of the invention. For example by increasing or decreasing the number of teeth within the claw end / ferrule, the sealing and tube retention properties would alter accordingly. A female screw thread may be provided in the interior of the claw end. The screw thread may replace one or more of the interior annular protuberances. A screw thread is generally easier to manufacture than an interior annular protuberance. For example, one, two or three of the interior annular protuberances which may be nearest to the open end of the claw end may be replaced by a screw thread. However, when a screw thread is provided, there is preferably still at least one interior annular protuberance still provided in the interior of the claw end to engage a tube/pipe or the like to be inserted into the claw end. In use the screw thread will deform in a similar manner to the annular protuberances which will in turn cause the tube/pipe or the like to deform and thus cause a "bite" effect. It should also be noted that in some applications users may require the addition of a 'soft' seal, which would be placed in the recess 35 shown in Figure 16 created between the claw end / ferrule and the tube. This recess will reduce in volume during compression of the collar / nut and thus result in compression of the 'soft' seal.

All of the above described components could be manufactured from any material including metallic and non-metallic materials. In addition to this by increasing the mechanical properties such as hardness of the teeth 5 the tube bite would be dramatically enhanced. The coupling described above can be used with a tube or the like made from any material. However, a tube or the like made from metal is preferred. Such methods as already used in the twin ferrule industry could be used to generate these enhanced mechanical properties.

The following major differences between embodiments of the present invention and the prior art should be observed.

Unlike the circumferential compressive force applied to deform the inner body such that the one or more annular protuberances engage a tube or the like in embodiments of the present invention, conventional twin ferrule fittings use a knurled effect within the body to grip the tube. This knurled section does not produce a seal or bite / cut into the outer skin of the tube. The seal with this style of fitting is achieved by the internal profile of the body nose and the tube profile being forced together to produce a compressed / moulded form which produces a seal but does not bite into the tube.

It should also be noted that these conventional couplings are rated to far lower pressure ratings than embodiments of the invention described herein, and are limited to what tube wall thickness can be used.

## Claims

1. A coupling for attaching to an end of a pipe, tube, conduit or other round, solid or hollow section, the coupling comprising:
an inner body (20) with an interior bore (7) passing through at least a portion thereof to receive a tube (18) or the like, the bore (7) having one or more interior annular protuberances (5) extending into the bore (7); and
a collar (19) to be provided around the inner body (20) to apply a circumferential compressive force to deform the inner body (20), and configured to engage with and be held by the inner body (20),
wherein the inner body (20) has a groove (2) at the end of the inclined surface and the inner body (20) and the collar (19) each have co-acting inclined surfaces inclined to their axes provided by an external frusto-cone (1) on the inner body (20) and a corresponding frusto-conical inner surface within the collar (19), at least a portion of the bore (7) and one or more of the interior annular protuberances (5) being located within the frusto conical portion of the inner body, the co-acting inclined surfaces being arranged such that, in use, when a tube or the like is received in the bore (7) of the inner body (20) and the collar (19) applies a circumferential compressive force thereto, the body (20) is deformed such that the one or more annular protuberances (5) engage the tube (18) or the like to seal with it, the inner body (20) and collar (19) being provided with holding means which cooperate to retain the collar (19) in engagement around the inner body (20).

2. A coupling according to claim 1 wherein the interior annular protuberances (5) have a cutting surface to breach the skin of a tube (18) or the like to which it is fitted.

3. A coupling according to any one of the preceding claims, wherein the bore (7) of the inner body (20) has two or more interior annular protuberances (5).

4. A coupling according to claim 3, wherein the bore (7) of the inner body (20) has three or more interior annular protuberances (5).

5. A coupling according to claim 1, wherein the inner body (20) and collar (19) each have engagement means to be engaged by a tool to move the inner body and collar relatively towards each other for the complimentary co-acting inclined surfaces to co-act.

6. A coupling according to any preceding claim, wherein the collar (19) is configured to move linearly relative to the inner body (20) to bring the complimentary co-acting inclined surfaces into engagement.

7. A coupling according to any one of claims 4 to 6, wherein one or both of the co-acting inclined surfaces is provided with a friction reducing coating.

8. A coupling according to any one of claims 6 to 7 wherein the holding means
maintains the inner body (20) and collar (19) in engagement with each other after the complimentary co-acting inclined surfaces have co-acted.

9. A coupling according to any preceding claim, wherein the holding means is an interference fit.

10. A coupling according to any one of claims 1 to 8, wherein the inner body (20) and collar (19) each have corresponding threads (32) such that, in use, the collar (19) is rotated relative to the inner body (20) to move the collar (19) and the inner body (20) relatively towards each other for the complimentary co-acting inclined surfaces to co-act.

11. A method of attaching a coupling to an end of a tube, pipe, conduit or other round solid or hollow section, the method comprising:
providing a tube (18) or the like into a bore (7) passing through at least a portion of an inner body (20), the bore (7) having one or more interior annular protuberances (5) extending into the bore; and
providing a collar (19) around the inner body (20), the collar (19) and inner body (20) each having co-acting inclined surfaces, wherein the inner body (20) has a groove (2) at the end of the inclined surface and the collar (19) each have co-acting inclined surfaces inclined to their axes provided by an external frusto-cone (1) on the inner body (20) and a corresponding frusto-conical inner surface within the collar (19), at least a portion of the bore (7) and one or more of the interior annular protuberances (5) being located within the frusto conical portion of the inner body, the co-acting inclined surfaces being arranged; and
using the collar (19) to apply a circumferential compressive force to the inner body (20) so that the inner body (20) is deformed bringing the one or more annular protuberances (5) into engagement with the tube (18) or the like, the inner body (20) and collar (19) each being provided with holding means which cooperate to maintain the inner body (20) and collar (19) in engagement with each other.

12. A method according to claim 11, wherein the collar (19) and inner body (20) each have corresponding threads (32) and are moved relatively towards each other by rotating the collar (19) relative to the inner body (20).

13. A method according to claim 11, wherein the holding means is an interference fit.

## Patentansprüche

1. Verbindung zur Anbringung an einem Ende eines Rohrs, eines Schlauchs, einer Leitung oder eines anderen runden massiven oder hohlen Querschnitts, wobei die Verbindung Folgendes umfasst:
einen inneren Körper (20) mit einer inneren Bohrung (7), die durch zumindest einen Abschnitt davon verläuft, um einen Schlauch (18) oder dergleichen aufzunehmen, wobei die Bohrung (7) eine oder mehrere innere ringförmige Vorsprünge (5) aufweist, die sich in die Bohrung (7) erstrecken; und
eine Muffe (19), die um den inneren Körper (20) herum bereitgestellt ist, um eine umfängliche Presskraft zur Verformung des inneren Körpers (20) auszuüben, und die dazu ausgebildet ist, mit dem inneren Körper (20) einzugreifen und dadurch gehalten zu werden,
wobei der innere Körper (20) an dem Ende der geneigten Fläche eine Nut (2) aufweist, und der innere Körper (20) und die Muffe (19) jeweils zusammenwirkende geneigte Flächen aufweisen, die zu ihren Achsen geneigt sind und durch einen äußeren Kegelstumpf (1) an dem inneren Körper (20) und eine entsprechende kegelstumpfförmige innere Fläche in der Muffe (19) bereitgestellt sind, wobei sich zumindest ein Abschnitt der Bohrung (7) und einer oder mehrere der inneren ringförmigen Vorsprünge (5) in dem kegelstumpfförmigen Abschnitt des inneren Körpers befinden, wobei die zusammenwirkenden geneigten Flächen so angeordnet sind, dass der Körper (20) bei Verwendung, wenn ein Schlauch oder dergleichen in der Bohrung (7) des inneren Körpers (20) aufgenommen ist und die Muffe (19) darauf eine umfängliche Presskraft ausübt, so verformt wird, dass der eine oder die mehreren ringförmigen Vorsprünge (5) mit dem Schlauch (18) oder dergleichen eingreifen, um damit abzudichten, wobei der innere Körper (20) und die Muffe (19) mit Haltemitteln versehen sind, die zusammenwirken, um die Muffe (19) um den inneren Körper (20) in Eingriff zu behalten.

2. Verbindung nach Anspruch 1, wobei die inneren ringförmigen Vorsprünge (5) eine Schneidefläche aufweisen, um die Haut eines Schlauchs (18) oder dergleichen, an der sie angebracht wird, aufzubrechen.

3. Verbindung nach einem der vorhergehenden Ansprüche, wobei die Bohrung (7) des inneren Körpers (20) zwei oder mehr innere ringförmige Vorsprünge (5) aufweist.

4. Verbindung nach Anspruch 3, wobei die Bohrung (7) des inneren Körpers (20) drei oder mehr innere ringförmige Vorsprünge (5) aufweist.

5. Verbindung nach Anspruch 1, wobei der innere Körper (20) und die Muffe (19) jeweils Eingreifmittel zum Eingriff durch ein Werkzeug, um den inneren Körper und die Muffe relativ zueinander zu bewegen, damit die komplementären zusammenwirkenden geneigten Flächen zusammenwirken, aufweisen.

6. Verbindung nach einem der vorhergehenden Ansprüche, wobei die Muffe (19) dazu ausgebildet ist, sich geradlinig in Bezug auf den inneren Körper (20) zu bewegen, um die komplementären zusammenwirkenden geneigten Flächen in einen Eingriff zu bringen.

7. Verbindung nach einem der Ansprüche 4 bis 6, wobei eine oder beide der zusammenwirkenden geneigten Flächen mit einer reibungsverringernden Beschichtung versehen sind.

8. Verbindung nach einem der Ansprüche 6 bis 7, wobei das Haltemittel den inneren Körper (20) und die Muffe (19) in einem Eingriff miteinander behält, nachdem die komplementären zusammenwirkenden geneigten Flächen zusammengewirkt haben.

9. Verbindung nach einem der vorhergehenden Ansprüche, wobei das Haltemittel eine Presspassung ist.

10. Verbindung nach einem der Ansprüche 1 bis 8, wobei der innere Körper (20) und die Muffe (19) jeweils entsprechende Gewinde (32) aufweisen, so dass die Muffe (19) bei Verwendung in Bezug auf den inneren Körper (20) gedreht wird, um die Muffe (19) und den inneren Körper (20) in Bezug zueinander zu bewegen, damit die komplementären zusammenwirkenden geneigten Flächen zusammenwirken.

11. Verfahren zum Anbringen einer Verbindung an einem Ende eines Schlauchs, eines Rohrs, einer Leitung oder einem anderen runden massiven oder hohlen Querschnitt, wobei das Verfahren Folgendes umfasst:
Bereitstellen eines Schlauchs (18) oder dergleichen in einer Bohrung (7), die durch zumindest einen Abschnitt eines inneren Körpers (20) verläuft, wobei die Bohrung (7) einen oder mehrere innere ringförmige Vorsprünge (5) aufweist, die sich in die Bohrung erstrecken; und
Bereitstellen einer Muffe (19) um den inneren Körper (20), wobei die Muffe (19) und der innere Körper (20) jeweils zusammenwirkende geneigte Flächen aufweisen, wobei der innere Körper (20) an dem Ende der geneigten Fläche eine Nut (2) aufweist, und die Muffe (19) jeweils zusammenwirkende geneigte Flächen aufweisen, die zu ihren Achsen geneigt sind und durch einen äußeren Kegelstumpf (1) an dem inneren Körper (20) und eine entsprechende kegelstumpfförmige innere Fläche in der Muffe (19) bereitgestellt sind, wobei sich zumindest ein Abschnitt der Bohrung (7) und einer oder mehrere der inneren ringförmigen Vorsprünge (5) in dem kegelstumpfförmigen Abschnitt des inneren Körpers befinden, wobei die zusammenwirkenden geneigten Flächen angeordnet sind; und
Verwenden der Muffe (19), um eine umfängliche Presskraft auf den inneren Körper (20) auszuüben, damit der innere Körper (20) verformt wird und der eine oder die mehreren ringförmigen Vorsprünge (5) mit dem Schlauch (18) oder dergleichen in Eingriff gebracht werden, wobei der innere Körper (20) und die Muffe (19) jeweils mit Haltemitteln versehen sind, die zusammenwirken, um den inneren Körper (20) und die Muffe (19) in einem Eingriff miteinander zu behalten.

12. Verfahren nach Anspruch 11, wobei die Muffe (19) und der innere Körper (20) jeweils entsprechende Gewinde (32) aufweisen und durch Drehen der Muffe (19) in Bezug auf den inneren Körper (20) in Bezug zueinander bewegt werden.

13. Verfahren nach Anspruch 11, wobei das Haltemittel eine Presspassung ist.

## Revendications

1. Raccord destiné à être fixé à une extrémité d'un tuyau, d'un tube, d'un conduit ou de toute autre section arrondie, solide ou creuse, le raccord comprenant :
un corps intérieur (20) avec un alésage intérieur (7) traversant au moins une partie pour recevoir un tube (18) ou un élément similaire, l'alésage (7) comportant une ou plusieurs protubérances annulaires intérieures (5) s'étendant dans l'alésage (7) ; et
un collier (19) situé autour du corps intérieur (20) pour appliquer une force de compression circonférentielle afin de déformer le corps intérieur (20), et conçu pour entrer en prise avec le corps intérieur (20) et être soutenu par ledit corps intérieur (20),
le corps intérieur (20) comportant une rainure (2) à l'extrémité de la surface inclinée, et le corps intérieur (20) et le collier (19) comportant chacun des surfaces inclinées coopérantes inclinées par rapport à leurs axes, produites par un tronc de cône externe (1) sur le corps intérieur (20) et une surface intérieure tronconique correspondante dans le collier (19), au moins une partie de l'alésage (7) et une ou plusieurs des protubérances annulaires intérieures (5) étant situées dans la partie tronconique du corps intérieur, les surfaces inclinées coopérantes étant disposées de sorte que, lors de l'utilisation, quand un tube ou un élément similaire est reçu dans l'alésage (7) du corps intérieur (20) et le collier (19) y applique une force de compression circonférentielle, le corps (20) soit déformé de sorte que la ou les protubérances annulaires (5) entrent en prise avec le tube (18) ou l'élément similaire pour assurer une prise étanche avec lui, le corps intérieur (20) et le collier (19) étant munis d'un moyen de soutien qui coopère pour retenir le collier (19) en prise autour du corps intérieur (20).

2. Raccord selon la revendication 1, dans lequel les protubérances annulaires intérieures (5) ont une surface de coupe qui permet de rompre le revêtement d'un tube (18) ou d'un élément similaire sur lequel il est monté.

3. Raccord selon l'une quelconque des revendications précédentes, dans lequel l'alésage (7) du corps intérieur (20) comporte au moins deux protubérances annulaires (5).

4. Raccord selon la revendication 3, dans lequel l'alésage (7) du corps intérieur (20) comporte au moins trois protubérances annulaires (5).

5. Raccord selon la revendication 1, dans lequel le corps intérieur (20) et le collier (19) ont chacun un moyen de prise devant être mis en prise par un outil afin de déplacer le corps intérieur et le collier relativement l'un vers l'autre afin de permettre aux surfaces inclinées coopérantes complémentaires de coopérer.

6. Raccord selon l'une quelconque des revendications précédentes, dans lequel le collier (19) est conçu pour se déplacer linéairement par rapport au corps intérieur (20) afin de mettre en prise les surfaces inclinées coopérantes complémentaires.

7. Raccord selon l'une quelconque des revendications 4 à 6, dans lequel l'une et/ou l'autre des surfaces inclinées coopérantes sont munies d'une surface réduisant le frottement.

8. Raccord selon l'une quelconque des revendications 6 et 7, dans lequel le moyen de retenue maintient le corps intérieur (20) et le collier (19) mutuellement en prise une fois que les surfaces inclinées coopérantes ont coopéré.

9. Raccord selon l'une quelconque des revendications précédentes, dans lequel le moyen de retenue est un ajustement avec serrage.

10. Raccord selon l'une quelconque des revendications 1 à 8, dans lequel le corps intérieur (20) et le collier (19) comportent chacun des filetages correspondants (32) de sorte que, lors de l'utilisation, le collier (19) soit tourné par rapport au corps intérieur (20) afin de déplacer le collier (19) et le corps intérieur (20) relativement l'un vers l'autre afin de permettre aux surfaces inclinées coopérantes de coopérer.

11. Procédé de fixation d'un raccord à une extrémité d'un tube, d'un tuyau, d'un conduit ou de toute autre section arrondie, solide ou creuse, le procédé consistant à :
introduire un tube (18) ou un élément similaire dans un alésage (7) traversant au moins une partie d'un corps intérieur (20), l'alésage (7) comportant une ou plusieurs protubérances annulaires intérieures (5) s'étendant dans l'alésage ; et
situer un collier (19) autour du corps intérieur (20), le collier (19) et le corps intérieur (20) comportant chacun des surfaces inclinées coopérantes, le corps intérieur (20) comportant une rainure (2) à l'extrémité de la surface inclinée, et le collier (19) comportant chacun des surfaces inclinées coopérantes inclinées par rapport à leurs axes, produites par un tronc de cône externe (1) sur le corps intérieur (20) et une surface intérieure tronconique correspondante dans le collier (19), au moins une partie de l'alésage (7) et une ou plusieurs des protubérances annulaires intérieures (5) étant situées dans la partie tronconique du corps intérieur, les surfaces inclinées coopérantes étant disposées ; et
utiliser le collier (19) pour appliquer une force de compression circonférentielle au corps intérieur (20) de sorte que le corps intérieur (20) soit déformé et mette la ou les protubérances annulaires (5) en prise avec le tube (18) ou l'élément similaire, le corps intérieur (20) et le collier (19) étant chacun munis d'un moyen de soutien qui coopère pour maintenir le corps intérieur (20) et le collier (19) en prise mutuellement.

12. Procédé selon la revendication 11, dans lequel le collier (19) et le corps intérieur (20) comportent chacun des filetages correspondants (32) et sont déplacés relativement l'un vers l'autre en faisant tourner le collier (19) par rapport au corps intérieur (20).

13. Procédé selon la revendication 11, dans lequel le moyen de retenue est un ajustement avec serrage.
